# EUROPEAN PATENT SPECIFICATION

(11) **EP 4 287 707 B1**
(45) Date of publication and mention of the grant of the patent: **02.07.2025**
(21) Application number: 22888611.5
(22) Date of filing: 19.12.2022
(51) Int. Cl.: H04W 48/20

(54) **SELECTING A NETWORK**
AUSWAHL EINES NETZES
SÉLECTION D'UN RÉSEAU

(30) Priority: 11.04.2022 CN 202210375146
(43) Date of publication of application: 06.12.2023
(73) Proprietor: Honor Device Co., Ltd., Shenzhen, Guangdong 518040 (CN)
(72) Inventor: WEI, Zhenrong, Shenzhen, Guangdong 518040 (CN); DING, Ming, Shenzhen, Guangdong 518040 (CN)
(74) Representative: Körber, Martin Hans
(86) International application number: PCT/CN2022/139922
(87) International publication number: WO 2023/197655

(56) References cited:
- CN-A- 106 028 406
- CN-A- 107 197 504
- CN-A- 110 536 363
- CN-A- 114 466 423
- US-A1- 2011 176 436
- US-A1- 2013 183 981
- US-A1- 2016 007 239
- US-A1- 2016 345 234
- US-B1- 9 888 415

## Description

### TECHNICAL FIELD

This application relates to the field of communication technologies, and in particular, to a method for selecting a network, an electronic device and a computer storage medium.

### BACKGROUND

In a mobile communication scenario, network selection may be understood as: When a plurality of networks coexist, a terminal (electronic device) selects one network for access, and further, services can be implemented on the accessed network. However, the terminal may not be able to access a better network due to reasons such as a network configuration.

As can be seen, a network selection function of the terminal needs to be improved.

US 2013/183981 A1 discloses a method for selecting a network comprising the steps of: receiving a redirection message indicating a frequency for a potential target cell, attempting to acquire a target cell based on the frequency indicated in the redirection message and, if the attempt to acquire a target cell based on the indicated frequency fails to find a suitable target cell, attempting to find a suitable target cell using a heuristic approach involving frequencies of previously acquired cells.

US 2016/345234 A1 discloses a method for selecting a network comprising the steps of: determining a speed of a user equipment (UE) when a circuit switched fallback (CSFB) call in a second radio access technology (RAT) releases, suspending a return to a first RAT without searching non-dedicated frequencies of the first RAT when the speed of the UE is above a first predefined threshold and a signal quality of a dedicated frequency of the first RAT, included in a release message from the second RAT or in a record of the UE, is below a second predetermined threshold, and searching the non-dedicated frequencies of the first RAT when the speed of the UE is below the first predefined threshold and the signal quality of the dedicated frequency of the first RAT, included in the release message or in the record of the UE, is below the second predetermined threshold.

### SUMMARY

To solve a problem of how to improve a network selection function of a terminal (en electronic device), embodiments of the present application provides a method for selecting a network, an electronic device and a computer storage medium, according to the enclosed independent claims. Advantageous features of the present invention are defined in the corresponding subclaims.

According to a first aspect , a method for selecting a network is provided, as defined in independent claim 1. It can be seen that after receiving the redirect message, the electronic device selects, based on the signal parameter of the frequency carried in the redirect message and the signal parameter of the prior frequency, the target frequency to be redirected to. Compared with a manner of redirecting to a cell at the frequency carried in the redirect message, the method is more conducive to selecting a frequency at which a signal is better, and further redirecting to a network in which a signal is better. Therefore, the electronic device has a better network selection function.

In some implementations, the selecting, based on a signal parameter of the first frequency and a signal parameter of a prior frequency, a target frequency from the first frequency and the prior frequency includes: obtaining a second signal parameter of the prior frequency based on a first signal parameter of the prior frequency and a preset first compensation value, where a change from the first signal parameter of the prior frequency to the second signal parameter of the prior frequency indicates that a signal at the prior frequency deteriorates; and selecting, based on a first signal parameter of the first frequency and the second signal parameter of the prior frequency, the target frequency from the first frequency and the prior frequency. The function of the compensation value is to make the signal at the prior frequency worse. To be specific, signal quality comparison with the frequency carried in the redirect message is not performed by using a real signal parameter of the prior frequency, but is performed after signal deterioration, to improve the possibility of selecting the frequency carried in the redirect message as the target frequency in the case of selecting the target frequency based on the quality of the signal. Therefore, the possibility of performing redirecting according to the frequency configured a network is improved, to reduce the possibility of service interruption and ensure service continuity.

In some implementations, a procedure for obtaining the first compensation value includes: obtaining the first compensation value based on a preset correspondence, where the correspondence includes a correspondence between a service currently executed by the electronic device and a compensation value. Because the function of the compensation value is to ensure the service continuity, the correspondence between the compensation value and the service increases the convenience of obtaining the compensation value and ensures that the compensation value implements the function of ensuring service continuity.

In some implementations, the compensation value in the correspondence is determined according to sensitivity of the service to continuity. To be specific, the more sensitive to continuity the service is, the greater the corresponding compensation value is, to ensure that the compensation value implements the function of ensuring service continuity.

In some implementations, the correspondence further includes: a correspondence between a communication standard used by the electronic device and a compensation value. The purpose of setting the compensation value based on the communication standard is also to ensure that the compensation value implements the function of ensuring service continuity.

In some implementations, the compensation value in the correspondence is determined according to a value range of the first signal parameter in the communication standard. It is assumed that the compensation value is a fixed value. The larger the value range of the first signal parameter, the smaller the degree of deterioration of the first signal parameter caused by the compensation value. Therefore, determining the compensation value according to the value range of the first signal parameter is conducive to further ensuring that the compensation value implements the function of ensuring service continuity.

In some implementations, before the selecting, based on a signal parameter of the first frequency and a signal parameter of a prior frequency, a target frequency from the first frequency and the prior frequency, the method further includes: determining that the first signal parameter of the first frequency is not greater than a first threshold. In other words, when the first signal parameter of the first frequency is not greater than the first threshold, it indicates that the cell at the first frequency does not meet a camping or service requirement. When the first signal parameter of the first frequency is greater than the first threshold, it indicates that the cell at the first frequency is adequate to meet the requirements of the terminal for camping and service execution. Therefore, the cell at the first frequency can be redirected to, without comparing the first frequency with the prior frequency. This not only ensures the service continuity, but also saves terminal resources.

In some implementations, before the determining that the first signal parameter of the first frequency is not greater than a first threshold, the method further includes: determining, based on the first signal parameter of the first frequency and the first signal parameter of the prior frequency, that a signal at the first frequency is not superior to the signal at the prior frequency. If the signal of the cell at the first frequency is optimal, it means that the signal at the frequency delivered by the network and to be redirected to is optimal, so that the frequency delivered by the network is redirected to, and there is no need to compare the first frequency with the prior frequency. It not only ensures service continuity but also saves terminal resources.

In some implementations, the first signal parameter includes: at least one of signal strength, reference signal received quality, and a signal to interference plus noise ratio.

According to a second aspect, an electronic device is provided, as defined in independent claim 6.

According to a third aspect, a computer storage medium is provided, as defined in independent claim 7.

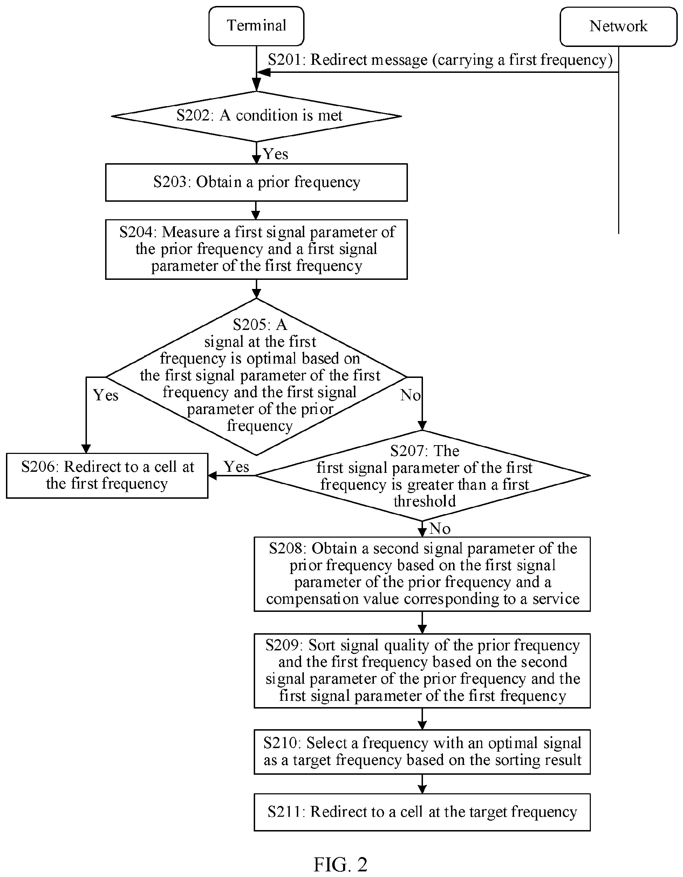

In the following, the invention is best understood in view of figure 2. The remaining embodiments, aspects and examples disclosed below are included for illustrative purposes and for facilitating the understanding of the invention.

### BRIEF DESCRIPTION OF DRAWINGS

FIG. 1 is an example diagram of a configuration of a wireless network in a network sharing scenario;
FIG. 2 is a flowchart of a method for selecting a network according to an embodiment of this application;
FIG. 3 is an example diagram of a structure of an electronic device according to an embodiment of this application; and
FIG. 4 is an example diagram of a software framework according to an embodiment of this application.

### DESCRIPTION OF EMBODIMENTS

The following clearly and completely describes technical solutions in embodiments of this application with reference to the accompanying drawings in the embodiments of this application. The terms used in the following embodiments are for the purpose of describing particular embodiments only and are not intended to be limiting of this application. As used in the appended claims and specification of this application, an expression in the singular such as "a", "an", "the", or "this" includes an expression in the plural such as "one or more", unless clearly indicated to the contrary in the context. It should be further understood that in the embodiments of this application, "one or more" means one, two, or more. "And/Or" is an association relationship for describing associated objects, and represents that three relationships may exist. For example, "A and/or B" may represent the following cases: Only A exists, both A and B exist, and only B exists, where A and B may be in singular forms or plural forms. The character "/" generally represents an "or" relationship between the associated objects.

Reference to "one embodiment" or "some embodiments" described in this specification means that a specific characteristic, structure or feature described in combination with this embodiment is included in one or more embodiments of this application. Therefore, phrases "in one embodiment", "in some embodiments", "in some other embodiments", "in some additional embodiments", and the like described in different places in this specification do not mean that all necessarily refer to the same embodiment, but mean "one or more but not all of embodiments", unless otherwise specifically emphasized. The terms "include", "have", and variants thereof all mean "include but not limited to" unless otherwise specifically emphasized in another manner.

"A plurality of" in the embodiments of this application means "greater than or equal to two". It should be noted that, in the description of the embodiments of this application, words such as "first" and "second" are merely used for distinguishing between description, and cannot be understood as an indication or implication of relative importance, or cannot be understood as an indication or implication of a sequence.

For ease of description, technical terms related in the embodiments of this application are described first.

A wireless communication system may be understood as a system including terminals and networks.

Wireless communication systems include, but are not limited to, a Global System for Mobile Communications (Global System for Mobile Communications, GSM), a code division multiple access (Code Division Multiple Access, CDMA) system, a wideband code division multiple access (Wideband Code Division Multiple Access, WCDMA) system, a long term evolution (Long Term Evolution, LTE) system, an LTE frequency division duplex (Frequency Division Duplex, FDD) system, an LTE time division duplex (Time Division Duplex, TDD) system, a universal mobile telecommunication system (Universal Mobile Telecommunication System, UMTS), and fifth generation mobile communication systems (Fifth Generation Mobile Communication Systems, 5G).

The GSM system may also be referred to as the second generation communication system, namely, 2G. The CDMA system and the WCDMA system may also be referred to as the third generation communication systems, namely, 3G. The LTE system, the LTE TDD system, and the like may also be referred to as the fourth generation communication systems, namely, 4G.

Networks of a wireless communication system includes a radio access network and a core network.

Network sharing may be understood as different operators sharing radio resources of a network. In other words, a plurality of operators share a radio access network.

A terminal may also be referred to as terminal equipment (Terminal Equipment), user equipment (User Equipment), a mobile station (Mobile Station, MS), a mobile terminal (Mobile Terminal), and the like.

Mobile management (MM, Mobile Management): It may be understood as management of terminal location information, security, and service continuity, to optimize the connection between the terminal and the network, and further provide guarantees for various services.

Redirection: It is a part of mobility management. When the terminal establishes a radio resource control (Radio Resource Control, RRC) connection with the network, a signal of a cell where the terminal is located is poor. The network sends an RRC connection release (RRC Connection Release) message to the terminal, where the RRC Connection Release message carries a frequency of an inter-frequency neighboring cell of the cell where the terminal is located. The terminal initiates random access to the cell at the frequency carried in the RRC Connection Release message, and re-establishes an RRC connection after accessing the cell at the frequency carried in the RRC Connection Release message. Redirection can realize transfer of the terminal between cells to ensure that the terminal is connected to a cell in which a signal is better.

Later-generation standards and previous-generation standards: A sequence is obtained according to the development of network standards: 2G, 3G, 4G, 5G. An earlier standard in the sequence is referred to as a previous-generation standard of a later standard, and a later standard is referred to as a later-generation standard of an earlier standard. For example, 5G is the later-generation standard of 2G, 3G and 4G, 3G is the later-generation standard of 2G, and 3G is the previous-generation standard of 4G.

Prior frequency: It may be understood as a frequency where a terminal successfully camps. After the terminal successfully camps on a specific frequency, the frequency is stored in the terminal as a prior frequency.

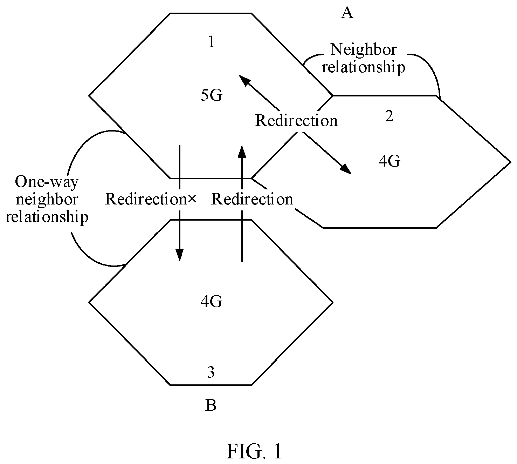

FIG. 1 shows an example of a configuration of a wireless network in a network sharing scenario.

It is assumed that a cell 1 is a cell of a 5G standalone (Standalone, SA) network of an operator A, and a cell 2 is a cell of an LTE network (also referred to as a 4G network) of the operator A. It is assumed that the cell 2 is an anchor cell of the 5G network, but signal strength is around -95 dB. In other words, although the 5G network is displayed on the mobile phone, a network rate experienced by a user in this cell is poor.

A cell 3 is a cell of an LTE network of an operator B. It is assumed that signal strength of the cell 3 is about -80 dB, and the cell 3 is not an anchor cell. A 4G network is displayed on the mobile phone, and a network rate experienced by the user in this cell is good.

The cell 1 and the cell 2 are pre-configured with a neighbor relationship. Based on a communication protocol, the neighbor relationship allows the terminal to redirect from the cell 1 to the cell 2, and allows the terminal to redirect from the cell 2 to the cell 1. The cell 3 and the cell 1 are pre-configured with a one-way neighbor relationship. Based on the communication protocol, the one-way neighbor relationship allows the terminal to redirect from the cell 3 to the cell 1, but does not allow the terminal to redirect from the cell 1 to the cell 3. There is no neighbor relationship configured between the cell 3 and the cell 2. Based on the communication protocol, the terminal cannot redirect from the cell 2 to the cell 3, and the terminal cannot redirect from the cell 3 to the cell 2 either.

Taking the terminal being a mobile phone as an example, it is assumed that the mobile phone camps on the cell 1 and establishes an RRC connection with the cell 1 after being turned on, or establishes an RRC connection with the cell 1 after the mobile phone moves to the cell 1. In other words, the mobile phone is in the 5G network. It is assumed that current signal strength of the cell 1 is around -115 dB. In other words, the signal is not good. Therefore, the 5G network triggers a redirection procedure of the mobile phone.

Based on the foregoing resource configuration, because the cell 2 has a neighbor relationship with the cell 1, and the cell 3 has a one-way neighbor relationship with the cell 1, the RRC Connection Release message sent by the network to the mobile phone carries a frequency of the cell 2, but does not carry a frequency of the cell 3.

The mobile phone redirects from the cell 1 to the cell 2 based on the RRC Connection Release message. Because a signal in the cell 2 is poor, the network rate experienced by the user in the cell 2 is still not good. However, because there is a one-way neighbor relationship between the cell 1 and the cell 2, the mobile phone cannot redirect from the cell 1 to the cell 3 although the signal in the cell 3 is better.

It can be seen that in the network sharing scenario, although the mobile phone can achieve redirection, there is a possibility that the mobile phone cannot redirect to a cell in which a signal is better.

Further, during research, it is found that, for some reasons, it is difficult to configure a neighbor relationship between cells of different operators. Therefore, it is difficult to realize redirection from the cell 1 to the cell 3 by configuring a neighbor relationship between the cell 1 and the cell 3.

Therefore, although the goal of network sharing is to provide better network resources, due to some reasons, it is difficult to realize this goal.

The method for selecting a network disclosed in the embodiments of this application aims to improve the possibility of redirecting a terminal to a network in which a signal is better.

The method for selecting a network provided in the embodiments of this application is applicable to but not limited to the scenario shown in FIG. 1.

In addition to being applied to the network sharing scenario, the method can be further applied to a non-network sharing scenario. For example, the cell 1, the cell 2, and the cell 3 shown in FIG. 1 may all be cells of the operator A. In this case, even if the cell 1 and the cell 3 are pre-configured with a neighbor cell relationship, the method provided in the embodiments of this application can still be used to select a network.

In addition to being applied to redirection between networks of different standards (for example, the 5G network and the 4G network described in FIG. 1), the method can be further applied to redirection between networks of the same standard. For example, the three cells shown in FIG. 1 may alternatively be cells of the 5G network or cells of the 4G network.

The 5G SA network shown in FIG. 1 may be replaced by a 5G non-standalone (None-Standalone, NSA) network.

In addition to the 5G network and the 4G network shown in FIG. 1, the method can be further applied to the 2G or 3G network, for example, redirecting from a cell of the 3G network to a cell of the 2G network.

In addition to redirecting from a network of a later-generation standard to a network of a previous-generation standard, it is also possible to redirect from a network of a previous-generation standard to a network of a later-generation standard, for example, redirect from a cell of the 4G network to a cell of the 5G network, and for example, redirect from a cell of the 3G network to a cell of the 4G or 5G network.

The method for selecting a network provided in the embodiments of this application is applicable to a scenario in which the terminal establishes an RRC connection (excluding established calls) with the network from the perspective of a status of the terminal.

Taking a scenario in which different operators share a network and redirect from a 5G network to a 4G network as an example, FIG. 2 is a flowchart of a method for selecting a network disclosed in an embodiment of this application. The method includes the following steps:

S201: A network transmits a redirect message carrying a first frequency to a terminal.

It is assumed that a frequency of a frequency band of a cell where the terminal camps before redirection is referred to as an original frequency, and a frequency of a frequency band of a cell where the terminal camps after redirection is a target frequency. In this case, the first frequency is a target frequency configured by the network for the terminal. As shown in FIG. 1, the first frequency is a frequency of a frequency band where the cell 2 is located.

In some implementations, the redirect message is an RRC Connection Release message, and the RRC Connection Release message carries the first frequency. In some other implementations, the redirect message is another message except the RRC Connection Release message. This is not limited herein.

It may be understood that the network described in S201 may be understood as a network device, including at least one of a radio access network device and a core network device. An example of the radio access network device is a base station, and an example of the core network device is a mobility management entity (Mobility Management Entity, MME). In some implementations, the MME sends the redirect message to the terminal through the base station.

It may be understood that carrying the first frequency in the redirect message is only one implementation. In some other implementations, the redirect message carries a plurality of (for example, two) frequencies including the first frequency. In this case, the following operations on the first frequency can be replaced by operations on the frequency carried in the redirect message.

For the manner of triggering the network to transmit the redirect message to the terminal, refer to the communication protocol. This is not repeated herein.

S202: The terminal determines whether a condition is met in response to the redirect message.

The condition described in this step is a trigger condition for the subsequent steps of S202.

In some implementations, the condition includes at least one of the following 1, 2, and 3:
1. A quantity of frequencies carried in the redirect message is less than a quantity threshold.

The quantity threshold may be pre-configured, for example, the quantity threshold is 2.

It may be understood that when the quantity of frequencies carried in the redirect message is small, a range of cells that the terminal can select in the redirection procedure is small. Therefore, the terminal is very likely to redirect to a cell with poor signal based on the redirect message, for example, the cell 2 shown in FIG. 1. Therefore, the quantity of frequencies carried in the redirect message is used as one of trigger conditions for the subsequent steps.

2. The last redirection of the terminal fails.

The last redirection is redirection that occurs before S201. The redirection failure may be understood as unsuccessful redirection from one cell to another. For example, as shown in FIG. 1, the redirect message transmitted by the network carries the frequency of the frequency band where cell 2 is located, but the terminal fails to redirect from the cell 1 to the cell 2.

In some implementations, the last redirection is a redirection procedure performed based on a communication protocol. For example, after receiving the RRC Connection Release message transmitted by the network in the last redirection procedure, the terminal initiates random access to the cell at the frequency carried in the RRC Connection Release message, and re-establishes an RRC connection after accessing the cell at the frequency carried in the RRC Connection Release message.

In some other implementations, the last redirection is the redirection procedure provided in the embodiments of this application (namely, the procedure shown in FIG. 2).

3. The terminal returns to a first network after redirecting from the first network to a second network.

As shown in FIG. 1, after the mobile phone redirects from the cell 1 of the 5G network to the cell 2 of the 4G network, because the signal of the cell 2 is not good, and the mobile phone cannot redirect from the cell 1 or the cell 2 to the cell 3, the mobile phone redirects from the cell 2 of the 4G network back to the cell 1 of the 5G network.

It may be understood that the terminal returning to the first network after redirecting from the first network to the second network may occur before S201. In other words, after redirecting from the first network to the second network last time, the terminal returns to the first network. A condition 3 also means that the signal is still poor after redirection.

When the condition is met, S203 is performed; and when the condition is not met, a redirection procedure is performed based on the communication protocol. It may be understood that a manner of executing the redirection procedure based on the communication protocol is: redirecting to the cell at the first frequency.

It may be understood that if the condition is not met, the subsequent steps are not performed. The purpose of S202 is to ensure preferential redirection to a network having the same operator as the network camped before the redirection, to ensure service continuity. The following steps are performed only if the foregoing condition is met, in other words, the redirection has failed or the signal is still poor after redirection.

It may be understood that S202 is an optional step. In other words, S202 is skipped after S201, and S203 is executed.

S203: The terminal obtains a prior frequency.

As defined above, the prior frequency is a frequency of a frequency band of a cell where the terminal previously camped. In some implementations, the terminal reads the prior frequency from a memory of the terminal.

It may be understood that in the case of a shared network, cells where the terminal camps may belong to different communication standards and different operators. Therefore, prior frequencies are classified and stored according to the communication standards and the operators.

It is assumed that the terminal previously camped on 4G and 5G cells of an operator PLMN1 and a 4G cell of an operator PLMN2. In this case, examples of prior frequencies are shown in Table 1.

In Table 1, prior frequencies of the 4G cell of the operator PLMN1 are Freq1 and Freq2, prior frequencies of the 5G cell of the operator PLMN1 are Freq3 and Freq4, and prior frequencies of the 4G cell of the operator PLMN2 are Freq5 and Freq6.

**Table 1**

| Operator | Standard | Prior frequency |
|---|---|---|
| PLMN1 | 4G | Freq1, Freq2 |
| PLMN1 | 5G | Freq3, Freq4 |
| PLMN2 | 4G | Freq5, Freq6 |

S204: The terminal measures a first signal parameter of the prior frequency and a first signal parameter of the first frequency.

In some implementations, the first signal parameter includes at least one of signal strength, reference signal received quality (Reference Signal Received Quality, RSRQ), and a signal to interference plus noise ratio (Signal to Interference plus Noise Ratio, SINR). It may be understood that the greater the signal strength, the better the signal. The better the RSRQ, the better the signal. SINR is a combination of signal strength and interference. The greater the SINR, the better the signal.

It can be known from S204 that although the network sends the first frequency to the terminal, the terminal not only measures the first frequency, but also measures the prior frequency. It may be understood that if the first frequency is a prior frequency, as shown in Table 1, it is assumed that the first frequency is Freq1. To save resources, it is not necessary to repeat the measurement of the first frequency. For example, the terminal measures the first signal parameter of the prior frequency other than Freq1 in Table 1.

In some implementations, based on a network sharing scenario, the terminal selects a prior frequency that belongs to the same or a different operator as the first frequency for measurement of a first signal parameter. As shown in Table 1, it is assumed that the first frequency is Freq1, indicating that the network indicates redirection from the 5G network to the 4G network. In this case, prior frequencies whose first signal parameters are to be measured are Freq2, Freq5, and Freq6.

In some other implementations, the terminal selects a prior frequency in the same standard as the first frequency for measurement of a first signal parameter. If the first frequency is Freq1 in Table 1, prior frequencies whose first signal parameters are to be measured are Freq2, Freq5, and Freq6.

For the manner in which the terminal measures a first signal parameter of a frequency, refer to the communication protocol. This is not repeated herein.

S205: The terminal determines whether a signal at the first frequency is optimal based on the first signal parameter of the first frequency and the first signal parameter of the prior frequency.

The optimal signal is at least one of optimal signal strength, optimal RSRQ, and optimal SINR. The optimal signal strength may be understood as the maximum signal strength. The optimal RSRQ may be understood as the maximum RSRQ. The optimal SINR may be understood as the maximum SINR.

In some implementations, one of the signal strength, the RSRQ, and the SINR is specified as a determination basis. Based on the determination basis, it is determined whether the signal at the first frequency is optimal. For example, if the signal strength is specified as the determination basis, and the signal strength of the first frequency is greater than signal strength of all prior frequencies, it is determined that the signal at the first frequency is optimal.

In some other implementations, at least two of the signal strength, the RSRQ, and the SINR are used as the determination basis. For example, the signal strength of the first frequency is greater than the signal strength of all prior frequencies, and the RSRQ of the first frequency is greater than RSRQ of all prior frequencies, it is determined that the signal at the first frequency is optimal.

It may be understood that a priority may be set for at least two items such as the signal strength and the RSRQ as the determination basis. When determination results determined based on at least two items such as the signal strength and the RSRQ are inconsistent, the determination result determined by the parameter with a higher priority prevails. For example, the signal strength of the first frequency is greater than the signal strength of all prior frequencies. In other words, it is determined based on the signal strength that the signal at the first frequency is optimal. However, the RSRQ of the first frequency is not greater than RSRQ of all prior frequencies. In other words, it is determined based on the RSRQ that the signal at the first frequency is not optimal. Therefore, because the priority of the signal strength is higher than that of the RSRQ, it is determined that the signal at the first frequency is optimal.

If the signal at the first frequency is optimal, S206 is performed; otherwise, S207 is performed.

S206: The terminal redirects to a cell at the first frequency.

It may be understood that because the signal of the cell at the first frequency is optimal, it means that the signal at the frequency delivered by the network and to be redirected to is optimal, so that the frequency delivered by the network is redirected to, and there is no need to perform the following procedure.

In this embodiment of this application, for the specific procedure of redirecting to the cell at the first frequency, refer to the communication protocol. This is not repeated herein.

S207: The terminal determines whether the first signal parameter of the first frequency is greater than a first threshold.

With reference to the foregoing definition of the first signal parameter, it may be understood that in some implementations, the first threshold includes a signal strength threshold, an RSRQ threshold, and an SINR threshold. That the first signal parameter of the first frequency is greater than the first threshold may be understood as the signal strength in the first signal parameter of the first frequency being greater than the signal strength threshold, the RSRQ in the first signal parameter of the first frequency being greater than the RSRQ threshold, and the SINR in the first signal parameter of the first frequency being greater than the SINR threshold.

In some other implementations, at least one of the signal strength, the RSRQ, and the SINR of the first frequency is specified as the determination basis, and it is determined whether the determination basis is greater than the corresponding threshold. For example, the SINR is specified as the determination basis, and it is determined whether the SINR is greater than the SINR threshold.

It may be understood that a priority may be set for the parameters such as the signal strength and the RSRQ as the determination basis, and it is determined whether the parameter with higher priority is greater than the corresponding threshold in the first threshold. For example, it is assumed that the priority of the RSRQ is higher than that of the signal strength. In this case, it is determined whether the RSRQ of the first frequency is greater than the RSRQ threshold.

The first threshold may be preset, and the setting principle of the first threshold may be as follows: if the first signal parameter of the cell is greater than the first threshold, the cell meets the requirements of the terminal for camping and service execution. For example, the signal strength threshold in the first threshold is -100 dBm, and the RSRQ threshold is -100 dB.

Because the first signal parameter is greater than the first threshold, it means that the cell at the first frequency is adequate to meet the requirements of the terminal for camping and service execution. Therefore, if the first signal parameter of the first frequency is greater than the first threshold, S206 is performed, to be specific, the terminal redirects to the cell at the first frequency. If the first signal parameter of the first frequency is not greater than the first threshold, it means that the cell at the first frequency does not meet a camping or service requirement, and S208 is performed.

It may be understood that the redirection of the terminal to a frequency selected independently rather than configured by the network may cause service interruption. It can be seen that the purpose of setting the first threshold is also to ensure preferential redirection to a network having the same operator as the network camped before the redirection, to ensure service continuity.

S208: The terminal obtains a second signal parameter of the prior frequency based on the first signal parameter of the prior frequency and a compensation value corresponding to a service.

The service is a service currently performed by the terminal.

The function of the compensation value is: after acting on the first signal parameter of the prior frequency, the first signal parameter after the action (namely, the second signal parameter of the prior frequency) is compared with that before the action (namely, the first signal parameter of the prior frequency), indicating that the signal at the prior frequency deteriorates. In other words, a change from the first signal parameter of the prior frequency to the second signal parameter of the prior frequency indicates that a signal at the prior frequency deteriorates.

Based on the function of the compensation value, it can be learned that a specific value of the compensation value is related to a manner of acting on the first signal parameter of the prior frequency.

In some implementations, the manner in which the compensation value acts on the first signal parameter of the prior frequency is addition. In other words, the first signal parameter of the prior frequency is added to the compensation value, to obtain the second signal parameter of the prior frequency, so that the terminal obtains the second signal parameter of the prior frequency with relatively low calculation cost.

In this case, for the signal strength in the first signal parameter, the compensation value may be a negative signal strength value, for example, -3 dBm. For the RSRQ in the first signal parameter, the compensation value may be a negative RSRQ value, for example, -3 dB. Similarly, an example of the compensation value of SINR is -3.

It may be understood that the purpose of setting the compensation value is to make the signal at the prior frequency worse, so that in the subsequent steps, the first frequency configured by the network is preferably selected as a frequency to be redirected to, thereby ensuring the service continuity.

In some implementations, the compensation value is set based on sensitivity of the service. Sensitivity may be understood as requirements of the service for continuity, and the higher the sensitivity, the higher the requirements of the service for continuity. Therefore, for the signal strength, the RSRQ, and the SINR, the higher the sensitivity of the service, the greater the compensation value. The purpose is to ensure that sensitive services are preferentially accessed to a cell at a frequency allocated by the network, to ensure service continuity.

In some other implementations, the compensation value may alternatively be set according to a communication standard. Because when a value range of the first signal parameter is large, the smaller the compensation value, the smaller the contribution to the deterioration of the first signal parameter. Therefore, the principle of setting the compensation value according to the communication standard is that the larger the value range of the first signal parameter in the communication standard, the greater the compensation value.

It may be understood that the compensation value may alternatively be set jointly according to the communication standard and the service, as shown in Table 2.

Table 2 is an example of compensation values corresponding to some services:

**Table 2**

| Service scenario | Standard | Compensation value |
|---|---|---|
| Call (no call established) | 4G/5G | Offset1 |
| Sensitive data service | 5G | Offset2 |
| Non-service scenario | 4G | Offset3 |

The call described in Table 2 refers to a time period during which the call is established but has not been established with a peer end. The non-service scenario may be understood as a scenario in which no service is performed, for example, in an idle state. Examples of sensitive data services are games and the like.

S209: The terminal sorts signal quality of the prior frequency and the first frequency based on the second signal parameter of the prior frequency and the first signal parameter of the first frequency, to obtain a sorting result.

It may be understood that the first signal parameter is at least one of the signal strength, the RSRQ and the SINR. Because the second signal parameter is obtained based on the first signal parameter and the corresponding compensation value, the second signal parameter is also at least one of the signal strength, the RSRQ and the SINR. Therefore, the sorting basis may be at least one of the signal strength, the RSRQ and the SINR.

In some implementations, a parameter is selected from the signal strength, the RSRQ, and the SINR as the sorting basis. For example, sorting is performed according to the signal strength to obtain the sorting result.

It may be understood that, when one parameter (for example, the signal strength) is selected as the sorting basis, in S208, second signal parameters of other parameters (for example, the RSRQ and the SINR) may not be calculated.

S210: The terminal selects a frequency with an optimal signal as a target frequency based on the sorting result.

Taking sorting from large to small according to the signal strength as an example, a signal at a frequency with signal strength ranked first is optimal, and the frequency is used as the target frequency.

S211: The terminal redirects to a cell at the target frequency.

To sum up, the procedure shown in FIG. 2 preferentially redirects to the frequency configured by the network. When the signal at the frequency configured by the network is poor, the quality of the prior frequency and the frequency configured by the network are evaluated, and according to an evaluation result, the target frequency is selected for redirection, so that the possibility of selecting a better network by the terminal can be improved.

In addition, the first threshold is set for the frequency configured by the network, and the compensation value corresponding to the service is set for the frequency not configured by the network. In this way, the terminal can preferentially redirect to the frequency configured by the network, to ensure the service continuity while improving the possibility of selecting a better network by the terminal.

The method for selecting a network according to the foregoing embodiments may be applied to an electronic device supporting calls such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a smartwatch. The foregoing terminal is also a type of the electronic device.

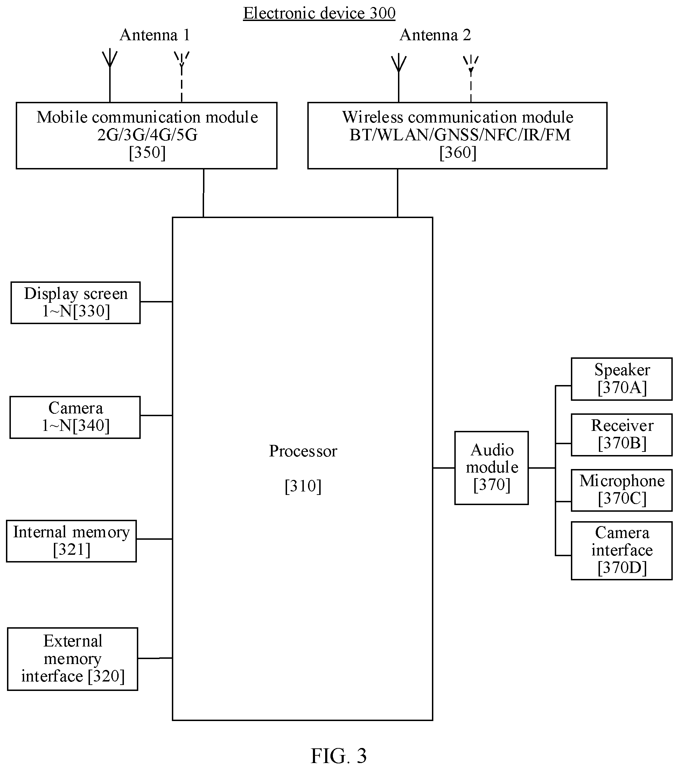

FIG. 3 shows an example of composition of an electronic device according to an embodiment of this application. A mobile phone is used as an example. The electronic device 300 may include a processor 310, an external memory interface 320, an internal memory 321, a display screen 330, a camera 340, an antenna 1, an antenna 2, a mobile communication module 350, a wireless communication module 360, and the like.

It may be understood that the structure illustrated in this embodiment does not constitute a specific limitation on the electronic device. In some other embodiments, the electronic device may include more or fewer components than those shown in the figure, or some components may be combined, or a different component arrangement may be used. The illustrated components can be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

It may be understood that an interface connection relationship between the modules illustrated in this embodiment is merely an example for description, and constitutes no limitation on the structure of the electronic device 300. In some other embodiments of this application, the electronic device 300 may also use an interface connection manner different from that in the foregoing embodiment or a combination of a plurality of interface connection manners.

The external memory interface 320 may be configured to connect to an external storage card, for example, a micro SD card, to expand a storage capability of the electronic device. The external memory card communicates with the processor 310 through the external memory interface 320 to implement a data storage function. For example, files such as music and video are stored in the external storage card.

The internal memory 321 may be configured to store computer-executable program code. The executable program code includes instructions. The processor 310 performs various function applications and data processing of the electronic device 300 by running the instructions stored in the internal memory 321. The internal storage 321 may include a program storage area and a data storage area. The program storage region may store an operating system, an application required by at least one function (for example, a voice playing function or an image playing function), and the like. The data storage region may store data (for example, audio data and an address book) and the like created when the electronic device is used. In addition, the internal memory 321 may include a high-speed random access memory, or may include a non-volatile memory such as at least one magnetic disk memory, a flash memory, or a universal flash storage (universal flash storage, UFS). The processor 310 runs the instructions stored in the internal memory 321 and/or the instructions stored in the memory disposed in the processor, to implement various functional applications and data processing of the electronic device.

A display function of the electronic device may be implemented by using the GPU, the display screen 330, the application processor, and the like. The GPU is a microprocessor for image processing, and is connected to the display screen 330 and the application processor. The GPU is configured to perform mathematical and geometric calculation, and is configured to render graphics. The processor 310 may include one or more GPUs, and the GPU executes a program instruction to generate or change display information.

The display screen 330 is configured to display an image, a video, and the like. The display screen 330 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device may include one or N display screens 330, and N is a positive integer greater than 1.

The electronic device can implement a photographing function by using the ISP, the camera 340, the video codec, the GPU, the display screen 330, the application processor, and the like.

The ISP is configured to process data fed back by the camera 340. For example, during photographing, a shutter is enabled. Light is transferred to a photosensitive element of the camera through a lens, and an optical signal is converted into an electrical signal. The photosensitive element of the camera transfers the electrical signal to the ISP for processing, and therefore, the electrical signal is converted into an image visible to a naked eye. The ISP may also perform algorithm optimization on image noise point, brightness, and skin tone. The ISP may also optimize parameters of a photographing scene such as the exposure and the color temperature. In some embodiments, the ISP may be arranged in the camera 340.

A wireless communication function of the electronic device may be implemented through the antenna 1, the antenna 2, the mobile communication module 350, the wireless communication module 360, the modem processor, and the baseband processor.

The antenna 1 and the antenna 2 are configured to transmit or receive an electromagnetic wave signal. Each antenna in the electronic device may be configured to cover one or more communication frequency bands. Different antennas may also be multiplexed to improve utilization of the antennas. For example, the antenna 1 may be multiplexed as a diversity antenna of the wireless local area network. In some other embodiments, the antenna may be used in combination with a tuning switch.

The mobile communication module 350 can provide a wireless communication solution including such as 2G/3G/4G/5G applied on the electronic device. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering and amplification on the received electromagnetic wave, and transmit a processed electromagnetic wave to the modem processor for demodulation. The mobile communication module 350 may further amplify a signal modulated by the modem processor, and convert the signal into an electromagnetic wave for radiation through the antenna 1. In some embodiments, at least some functional modules of the mobile communication module 350 may be disposed in the processor 310. In some embodiments, at least some functional modules of the mobile communication module 350 and at least some modules of the processor 310 may be disposed in the same device.

In some embodiments, the electronic device initiates or receives a call request through the mobile communication module 350 and the antenna 1.

The wireless communication module 360 may provide a solution for wireless communication including a wireless local area network (wireless local area network, WLAN) (such as a wireless fidelity (wireless fidelity, Wi-Fi) network), Bluetooth (bluetooth, BT), and a global navigation satellite system (global navigation satellite system, GNSS), frequency modulation (frequency modulation, FM), a near field communication (near field communication, NFC) technology, an infrared (infrared, IR) technology, and the like to be applied to the electronic device. The wireless communication module 360 may be one or more components into which at least one communication processing module is integrated. The wireless communication module 360 receives an electromagnetic wave by using the antenna 2, performs frequency modulation and filtering processing on an electromagnetic wave signal, and sends a processed signal to the processor 310. The wireless communication module 360 may also receive a to-be-sent signal from the processor 310, perform frequency modulation and amplification on the to-be-sent signal, and convert the signal into an electromagnetic wave for radiation through the antenna 2.

The electronic device 300 may implement an audio function such as music playing or recording by using the audio module 370, the speaker 370A, the phone receiver 370B, the microphone 370C, the headset jack 370D, the application processor, and the like.

The audio module 370 is configured to convert digital audio information into an analog audio signal output, and is further configured to convert an analog audio input into a digital audio signal. The audio module 370 may be further configured to encode and decode an audio signal. In some embodiments, the audio module 370 may be arranged in the processor 310, or some functional modules of the audio module 370 are arranged in the processor 310.

The speaker 370A, also referred to as a "horn", is configured to convert an audio electrical signal into a sound signal. Music can be listened to or a hands-free call can be answered by using the speaker 370A in the electronic device 300.

The phone receiver 370B, also referred to as a "receiver", is configured to convert an audio electrical signal into a sound signal. When a call is answered or a voice message is received through the electronic device 300, the receiver 370B may be put close to a human ear to listen to a voice.

The microphone 370C, also referred to as a "microphone" or a "microphone", is configured to convert a sound signal into an electrical signal. When making a call or sending voice information, the user may make a sound near the microphone 370C through the mouth of the user, to input a sound signal into the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may be alternatively disposed in the electronic device 300, to collect a sound signal, implement noise reduction, recognize a sound source, implement a directional recording function, and the like.

The headset jack 370D is configured to connect to a wired headset. The headset jack 370D may be a USB port, or may be a 3.5 mm open mobile terminal platform (open mobile terminal platform, OMTP) standard interface or a cellular telecommunications industry association of the USA (cellular telecommunications industry association of the USA, CTIA) standard interface.

In addition, an operating system is running on the foregoing components. For example, the operating system may be an iOS operating system, an Android operating system, a Windows operating system. An application may be installed and run on the operating system.

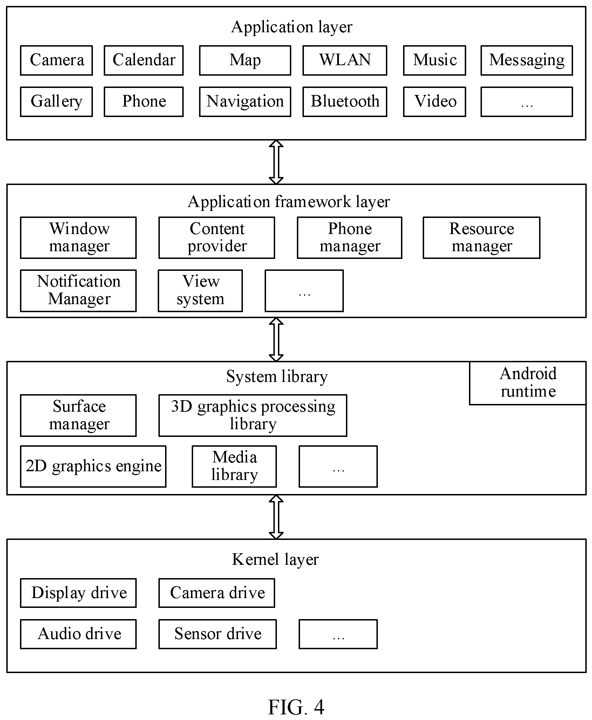

FIG. 4 is a block diagram of a software structure of an electronic device according to an embodiment of this application.

The layered architecture divides software into several layers, and each layer has a clear role and division of labor. Layers communicate with each other through a software interface. In some embodiments, the Android system is divided into four layers that are respectively an application layer, an application framework layer, an Android runtime and system library, and a kernel layer from top to bottom.

The application layer may include a series of application packages. As shown in FIG. 4, an application package may include applications such as a camera, a gallery, a calendar, a phone, a map, navigation, a WLAN, Bluetooth, music, a video, and messaging.

The application framework layer provides an application programming interface (application programming interface, API) and a programming framework for applications in the application layer. The application framework layer includes some predefined functions. As shown in FIG. 4, the application framework layer may include a window manager, a content provider, a telephony manager, a resource manager, a notification manager, a view system, and the like.

The window manager is used to manage window programs. The window manager may obtain a size of a display screen, determine whether there is a status bar, a lock screen, a screenshot, and the like.

The content provider is configured to store and obtain data and make the data accessible to applications. The data may include videos, images, audio, calls made and received, browsing history and bookmarks, an address book, and the like.

The telephony manager is configured to provide a communication function for the electronic device, for example, call status management (including answering, declining, or the like).

The resource manager provides various resources such as a localized character string, an icon, an image, a layout file, and a video file for an application.

The notification manager enables an application to display notification information in the status bar that may be used to convey a message of a notification type, where the message may disappear automatically after a short stay without user interaction. For example, the notification manager is configured to notify a downloading complete, a message reminder, and the like. The notification manager may alternatively display a notification in a form of a chart or a scroll bar text in a status bar at the top of the system, for example, a notification of an application run in the background, or may display a notification in a form of a dialog window on the screen. For example, text information is displayed in the status bar, an announcement is given, the electronic device vibrates, or an indicator light blinks.

The view system includes visual controls such as a control for displaying text and a control for displaying an image. The view system may be configured to build an application. A display interface may include one or more views. For example, a display interface including a short message notification icon may include a view for displaying text and a view for displaying a picture.

The Android Runtime includes a core library and a virtual machine. The Android runtime is responsible for scheduling and management of an Android system. In some embodiments of this application, the cold start of an application runs in the Android runtime, and the Android runtime obtains an optimized file status parameter of the application. Then, the Android runtime can determine, based on the optimized file status parameter, whether an optimized file is out of date due to system upgrade, and return a determination result to an application control module.

The core library includes two parts: functions to be invoked by java language, and a core library of Android.

The application layer and the application framework layer are run on the virtual machine. The virtual machine executes java files of the application layer and the application framework layer as binary files. The virtual machine is configured to implement functions such as object life cycle management, stack management, thread management, security and exception management, and recycling of waste.

The system library may include a plurality of function modules, for example, a surface manager (surface manager), a media library (Media Libraries), a 3D graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of audio and videos in various commonly used formats, still image files, and the like. The media library may support a plurality of audio and video coding formats, such as MPEG2, H.262, MP3, AAC, AMR, JPG, and PNG.

The 3D graphics processing library is configured to implement 3D graphics drawing, image rendering, compositing, layer processing, and the like.

The 2D graphics engine is a drawing engine for 2D drawing.

The kernel layer is a layer between hardware and software. The kernel layer includes at least a display drive, a camera drive, an audio drive, a sensor drive, and the like.

It should be noted that, although the embodiments of this application are described by using the Android system as an example, the basic principle thereof is also applicable to electronic devices based on operating systems such as iOS and Windows.

## Claims

1. A method for selecting a network, performed by an electronic device (300), the method comprising:
receiving (S201) a redirect message, wherein the redirect message carries a first frequency;
determining (S207) that a first signal parameter of the first frequency is not greater than a first threshold;
obtaining (S208) a second signal parameter of a prior frequency based on a first signal parameter of the prior frequency and a preset first compensation value corresponding to a service currently performed by the electronic device (300); wherein the preset first compensation value is a negative value and is added to the first signal parameter to obtain the second signal parameter to make the signal at the prior frequency worse, so that the first frequency is preferably selected as a frequency to be redirected to, wherein the prior frequency is a frequency of a frequency band of a cell where the electronic device (300) previously camped, and the first signal parameter of the prior frequency is measured by the electronic device (300);
selecting (S210), based on a comparison of a signal parameter of the first frequency and the second signal parameter, a target frequency from the first frequency and the prior frequency, wherein the electronic device (300) sorts (S209) signal qualities of the prior frequency and the first frequency based on the second signal parameter of a prior frequency and the first signal parameter of the first frequency, to obtain a sorting result, and selects (S210) a frequency with an optimal signal as a target frequency based on the sorting result, further wherein the first signal parameter is at least one of a signal strength, a RSRQ and a SINR and the second signal parameter is at least one of a signal strength, a RSRQ and a SINR; and
redirecting (S211) to a cell at the target frequency.

2. The method according to claim 1, further comprising:
obtaining the preset first compensation value based on a preset correspondence, wherein the preset correspondence comprises a correspondence between the service currently executed by the electronic device (300) and a compensation value.

3. The method according to claim 2, wherein the correspondence further comprises: a correspondence between a communication standard used by the electronic device (300) and a compensation value.

4. The method according to claim 3, wherein the compensation value in the correspondence is determined according to a value range of the first signal parameter in the communication standard.

5. The method according to claim 1, wherein before the determining (S207) that the first signal parameter of the first frequency is not greater than the first threshold, the method further comprises:
determining (S205), based on the first signal parameter of the first frequency and the first signal parameter of the prior frequency, that a signal strength of the first frequency is not superior to a signal strength of the prior frequency.

6. An electronic device (300), comprising:
a memory (321) and at least one processor (310), wherein the memory (321) is configured to store an application, and the at least one processor (310) is configured to execute the application to implement the method for selecting a network according to any one of claims 1 to 5.

7. A computer storage medium, configured to store a computer program, wherein the computer program, when run on an electronic device, causes the electronic device to perform the method for selecting a network according to any one of claims 1 to 5.

## Patentansprüche

1. Ein Verfahren zur Auswahl eines Netzwerks, ausgeführt von einem elektronischen Gerät (300), wobei das Verfahren umfasst:
Empfangen (S201) einer Umleitungsnachricht, wobei die Umleitungsnachricht eine erste Frequenz trägt;
Bestimmen (S207), dass ein erster Signalparameter der ersten Frequenz nicht größer als ein erster Schwellenwert ist;
Ermitteln (S208) eines zweiten Signalparameters einer vorherigen Frequenz basierend auf einem ersten Signalparameter der vorherigen Frequenz und einem voreingestellten ersten Kompensationswert, der einem Dienst entspricht, der derzeit von dem elektronischen Gerät (300) ausgeführt wird; wobei der voreingestellte erste Kompensationswert ein negativer Wert ist und zu dem ersten Signalparameter addiert wird, um den zweiten Signalparameter zu erhalten, um das Signal bei der vorherigen Frequenz zu verschlechtern, sodass die erste Frequenz vorzugsweise als eine Frequenz ausgewählt wird, zu der umgeleitet werden soll, wobei die vorherige Frequenz eine Frequenz eines Frequenzbands einer Zelle ist, in der das elektronische Gerät (300) zuvor verweilte, und der erste Signalparameter der vorherigen Frequenz von dem elektronischen Gerät (300) gemessen wird;
Auswählen (S210), basierend auf einem Vergleich eines Signalparameters der ersten Frequenz und des zweiten Signalparameters, einer Zielfrequenz aus der ersten Frequenz und der vorherigen Frequenz, wobei das elektronische Gerät (300) (S209) die Signalqualitäten der vorherigen Frequenz und der ersten Frequenz basierend auf dem zweiten Signalparameter einer vorherigen Frequenz und dem ersten Signalparameter der ersten Frequenz sortiert, um ein Sortierungsergebnis zu erhalten, und (S210) eine Frequenz mit einem optimalen Signal als Zielfrequenz basierend auf dem Sortierungsergebnis auswählt, wobei der erste Signalparameter mindestens einer von Signalstärke, RSRQ und SINR ist und der zweite Signalparameter mindestens einer von Signalstärke, RSRQ und SINR ist; und
Umleiten (S211) zu einer Zelle bei der Zielfrequenz.

2. Das Verfahren nach Anspruch 1, ferner umfassend:
Ermitteln des voreingestellten ersten Kompensationswerts basierend auf einer voreingestellten Entsprechung, wobei die voreingestellte Entsprechung eine Entsprechung zwischen dem Dienst, der derzeit von dem elektronischen Gerät (300) ausgeführt wird, und einem Kompensationswert umfasst.

3. Das Verfahren nach Anspruch 2, wobei die Entsprechung ferner umfasst: eine Entsprechung zwischen einem von dem elektronischen Gerät (300) verwendeten Kommunikationsstandard und einem Kompensationswert.

4. Das Verfahren nach Anspruch 3, wobei der Kompensationswert in der Entsprechung gemäß einem Wertebereich des ersten Signalparameters im Kommunikationsstandard bestimmt wird.

5. Das Verfahren gemäß Anspruch 1, wobei vor der Bestimmung (S207), dass der erste Signalparameter der ersten Frequenz nicht größer als der erste Schwellenwert ist, das Verfahren weiterhin umfasst:
Bestimmung (S205), basierend auf dem ersten Signalparameter der ersten Frequenz und dem ersten Signalparameter der vorherigen Frequenz, dass die Signalstärke der ersten Frequenz nicht höher ist als die Signalstärke der vorherigen Frequenz.

6. Eine elektronische Vorrichtung (300), umfassend:
einen Speicher (321) und mindestens einen Prozessor (310), wobei der Speicher (321) konfiguriert ist, eine Anwendung zu speichern, und der mindestens eine Prozessor
(310) konfiguriert ist, die Anwendung auszuführen, um das Verfahren zur Auswahl eines Netzwerks gemäß einem der Ansprüche 1 bis 5 umzusetzen.

7. Ein Computer-Speichermedium, konfiguriert, ein Computerprogramm zu speichern, wobei das Computerprogramm, wenn es auf einer elektronischen Vorrichtung ausgeführt wird, die elektronische Vorrichtung veranlasst, das Verfahren zur Auswahl eines Netzwerks gemäß einem der Ansprüche 1 bis 5 auszuführen.

## Revendications

1. Un procédé de sélection d'un réseau, exécuté par un dispositif électronique (300), le procédé comprenant :
réception (S201) d'un message de redirection, où le message de redirection transporte une première fréquence ;
détermination (S207) qu'un premier paramètre de signal de la première fréquence n'est pas supérieur à un premier seuil ;
obtention (S208) d'un second paramètre de signal d'une fréquence antérieure basé sur un premier paramètre de signal de la fréquence antérieure et une première valeur de compensation prédéfinie correspondant à un service actuellement exécuté par le dispositif électronique (300) ; où la première valeur de compensation prédéfinie est une valeur négative et est ajoutée au premier paramètre de signal pour obtenir le second paramètre de signal afin de rendre le signal à la fréquence antérieure moins favorable, de sorte que la première fréquence soit préférée comme fréquence vers laquelle rediriger, où la fréquence antérieure est une fréquence d'une bande de fréquence d'une cellule où le dispositif électronique (300) était précédemment connecté, et le premier paramètre de signal de la fréquence antérieure est mesuré par le dispositif électronique (300) ;
sélection (S210), basée sur une comparaison d'un paramètre de signal de la première fréquence et du second paramètre de signal, d'une fréquence cible parmi la première fréquence et la fréquence antérieure, où le dispositif électronique (300) classe (S209) les qualités de signal de la fréquence antérieure et de la première fréquence en fonction du second paramètre de signal d'une fréquence antérieure et du premier paramètre de signal de la première fréquence, pour obtenir un résultat de classement, et sélectionne (S210) une fréquence avec un signal optimal comme fréquence cible en fonction du résultat de classement, en outre où le premier paramètre de signal est au moins l'une des caractéristiques suivantes : une intensité de signal, un RSRQ et un SINR, et le second paramètre de signal est au moins l'une des caractéristiques suivantes : une intensité de signal, un RSRQ et un SINR ; et
redirection (S211) vers une cellule à la fréquence cible.

2. Le procédé selon la revendication 1, comprenant en outre :
obtention de la première valeur de compensation prédéfinie basée sur une correspondance prédéfinie, où la correspondance prédéfinie comprend une correspondance entre le service actuellement exécuté par le dispositif électronique (300) et une valeur de compensation.

3. Le procédé selon la revendication 2, où la correspondance comprend en outre : une correspondance entre une norme de communication utilisée par le dispositif électronique (300) et une valeur de compensation.

4. Le procédé selon la revendication 3, où la valeur de compensation dans la correspondance est déterminée selon une plage de valeurs du premier paramètre de signal dans la norme de communication.

5. Le procédé selon la revendication 1, dans lequel, avant de déterminer (S207) que le premier paramètre de signal de la première fréquence n'est pas supérieur au premier seuil, le procédé comprend en outre :
déterminer (S205), sur la base du premier paramètre de signal de la première fréquence et du premier paramètre de signal de la fréquence précédente, qu'une intensité de signal de la première fréquence n'est pas supérieure à une intensité de signal de la fréquence précédente.

6. Un dispositif électronique (300), comprenant :
une mémoire (321) et au moins un processeur (310), dans lequel la mémoire (321) est configurée pour stocker une application, et le ou les processeurs (310) sont configurés pour exécuter l'application afin de mettre en œuvre le procédé de sélection d'un réseau selon l'une quelconque des revendications 1 à 5.

7. Un support de stockage informatique, configuré pour stocker un programme informatique, dans lequel le programme informatique, lorsqu'il est exécuté sur un dispositif électronique, amène le dispositif électronique à effectuer le procédé de sélection d'un réseau selon l'une quelconque des revendications 1 à 5.
